Europäisches Patentamt

European Patent Office

Office européen des brevets

(11) Veröffentlichungsnummer: **0 001 638**
A1

# EUROPÄISCHE PATENTANMELDUNG

(21) Anmeldenummer: **78101187.9**

(22) Anmeldetag: **20.10.78**

(51) Int. Cl.²: **B 65 G 7/00**
**B 61 B 13/00, E 01 B 25/00**

(30) Priorität: **24.10.77 DE 2747606**

(43) Veröffentlichungstag der Anmeldung:
**02.05.79 Patentblatt 79 9**

(84) Benannte Vertragsstaaten:
**BE CH FR GB LU NL SE**

(71) Anmelder: **Wilhelm Hundhausen**
**Bäckerstrasse 4**
**D-5900 Siegen 21 Weidenau(DE)**

(72) Erfinder: **Hirz, Karl Heinz**
**Rotbuchenweg 25a**
**D-5963 Wenden 5(DE)**

(74) Vertreter: **Missling, Helmut, Dipl.-Ing. et al,**
**Bismarckstrasse 43**
**D-6300 Lahn-Giessen 1(DE)**

(54) Standbahn für schienengebundene Paletten.

(57) Standbahnanlagen (3, 4) mit sich kreuzenden Schienen (18, 19) für schienengebundene Paletten (11) müssen es gestatten, die Paletten auf die parallel oder winklig verlaufenden Schienen umsetzen zu können. Für diese Umsetzungsstationen besteht die Forderung, daß die Verschwenkung der Palette auf in beliebigen Winkeln angeordneten Schienen erfolgen kann, daß diese wenig Platz beanspruchen und die Paletten beliebig belastbar sind.

Um dies mit einfachsten Mitteln und kostengünstig zu ermöglichen, haben die Paletten Räder (12), die um eine lotrechte Achse (24) schwenkbar in der Palette angeordnet sind. In den Kreuzungspunkten der Schienen (7 bis 10) sind um eine lotrechte Achse (33) drehbare Schienenstücke (31) angeordnet, die jeweils ein Rad der Palette aufnehmen. Die Schienenstücke werden mit den entsprechenden Rädern der Palette in die neue Transportrichtung verdreht.

FIG.1

FIG.3

0001638

0001638

- 1 -

<u>Standbahn für schienengebundene Paletten</u>

Die Erfindung betrifft eine Standbahnanlage für schienengebundene Transport-Paletten mit Rädern, welche um eine in
der Palette gelagerte senkrechte Achse drehbar sind, und
deren Standbahnen sich in beliebigen Winkeln kreuzen.

Auf Standbahnen der vorstehend beschriebenen Art werden Paletten verschoben, die insbesondere zum Transport von Werkstücken dienen, die nacheinander verschiedenen Arbeitsstationen zugeführt werden sollen, in denen die Werkstücke bearbeitet werden. Derartige Standbahnen werden z.B. in der
Bauindustrie für die Herstellung von Betonfertigteilen benötigt.

In der Regel sind in einer Werkhalle mehrere Standbahnen
nebeneinander angeordnet, die sich auch in einem schiefen
Winkel kreuzen können. Die Anordnung der Standbahnen richtet
sich nach der Hallengröße und der anzulaufenden Bearbeitungsstationen. Für das Umsetzen einer Palette von einer Standbahn auf eine andere Standbahn ist es bekannt, Schiebebühnen zu verwenden, auf die Paletten gefahren werden und die
dann mit aufgesetzter Palette zur benachbarten Standbahn
verschoben werden. Sofern die Standbahnen in einem Winkel
zueinander verlaufen, ist zusätzlich eine Drehbühne erforderlich, die in den Schnittpunkten der beiden Standbahnen angeordnet ist. Abgesehen davon, daß diese Schiebe- und Drehbühnen aufwendig in der Herstellung sind, benötigen diese einen erheblichen Platz, wobei der Verschiebeweg für die Lagerung bzw. Fertigung ausfällt.

Aus der GB-PS 1 272 263 ist es bekannt, die Paletten mit um eine lotrechte Achse drehbaren Rädern auszubilden, die in horizontaler Richtung einen Abstand zum Auflagepunkt der Räder auf den Schienen aufweist. Durch Verschieben der Paletten können deren Räder auf feststehenden Kreuzungsstücken der Schienen in die gewünschte Richtung verschwenkt werden. Da für eine Drehung der Räder jedoch die Kräfte abhängig sind vom Abstand dieser beiden Achsen und der Abstand nicht beliebig groß gemacht werden kann, sind derartige Paletten nur für eine relativ geringe Gewichtsbelastung geeignet.

Der Erfindung liegt die Aufgabe zugrunde, eine Standbahnanlage der eingangs beschriebenen Art so auszubilden, daß bei geringem Aufwand Querverschiebungen und Richtungsänderungen im beliebigen Winkel von schienengebundenen Paletten für praktisch beliebige Lasten vorgenommen werden können, ohne daß Schiebe- oder Drehbühnen erforderlich sind und daß die Standbahnanlage, verglichen mit bekannten Standbahnanlagen, raumsparend ausgebildet ist.

Diese Aufgabe wird erfindungsgemäß dadurch gelöst, daß in den Kreuzungspunkten der einander schneidenden Schienen zweier Standbahnen je ein beiden gemeinsames, um eine lotrechte Achse drehbares Schienenstück für die Aufnahme je eines Rades der Palette angeordnet ist und daß alle Räder jeder Palette um eine in der Palette gelagerte lotrechte Achse drehbar sind.

Um bei einer erfindungsgemäßen Standbahnanlage eine Palette von einer Standbahn auf eine diese Standbahn kreuzende Standbahn zu verschieben, muß die Palette lediglich auf die verdrehbaren Schienenstücke in den Kreuzungspunkten beider Standbahnen mit ihren Rädern aufgeschoben werden. Anschließend werden die Schienenstücke so verdreht, daß diese nunmehr mit den Schienen der zweiten Standbahn fluchten. Die Palette bleibt während des Verdrehens der Schienenstücke unverändert stehen, lediglich die Räder, die um eine lotrechte Achse in der Palette drehbar angeordnet sind, werden in die neue Fahrtrichtung verschwenkt. Anschließend braucht die Palette lediglich in die neue Richtung geschoben zu werden.

Gemäß einer vorteilhaften Ausführungsform der Erfindung sind in den drehbaren Schienenstücken oberhalb der lotrechten Schwenkachse in den Laufflächen Vertiefungen angeordnet, in die die Räder der Palette einlaufen und so für die anschließende Drehung fixiert sind.

Gemäß einer weiteren vorteilhaften Ausbildung der Erfindung dienen federbelastete Kugeln, die am drehbaren Teil der Räder der Palette zur Anlage kommen, zur Verrastung der lotrechten Achse der Räder der Palette, damit beim Fahren ein Schwingen der Räder um diese Achse vermieden wird. Beim Verdrehen der Räder der Palette durch das drehbare Schienenstück wird diese Verrastung selbsttätig gelöst.

Weitere vorteilhafte Ausgestaltungen der Erfindung gehen aus den Zeichnungen hervor. In dieser zeigen:

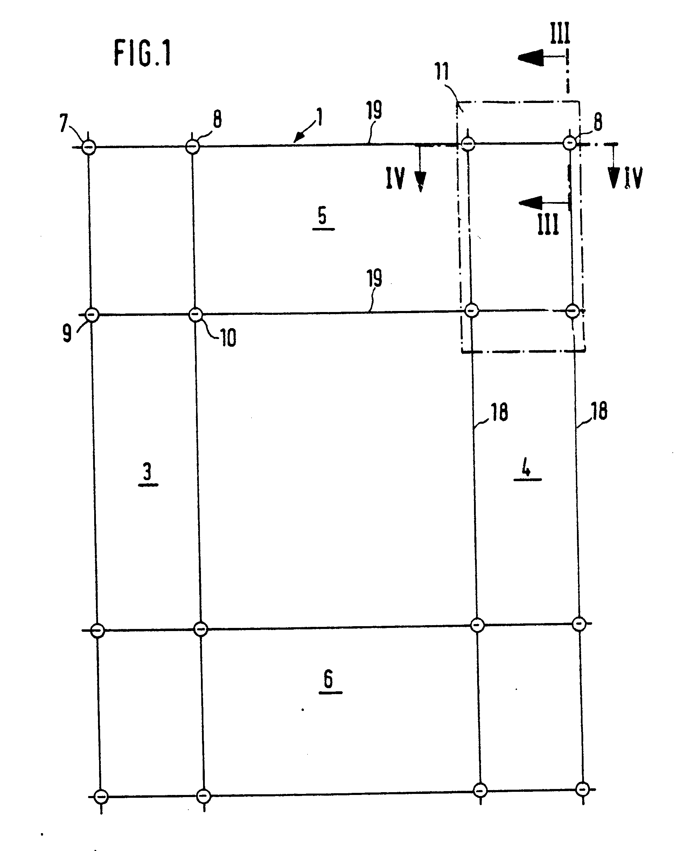

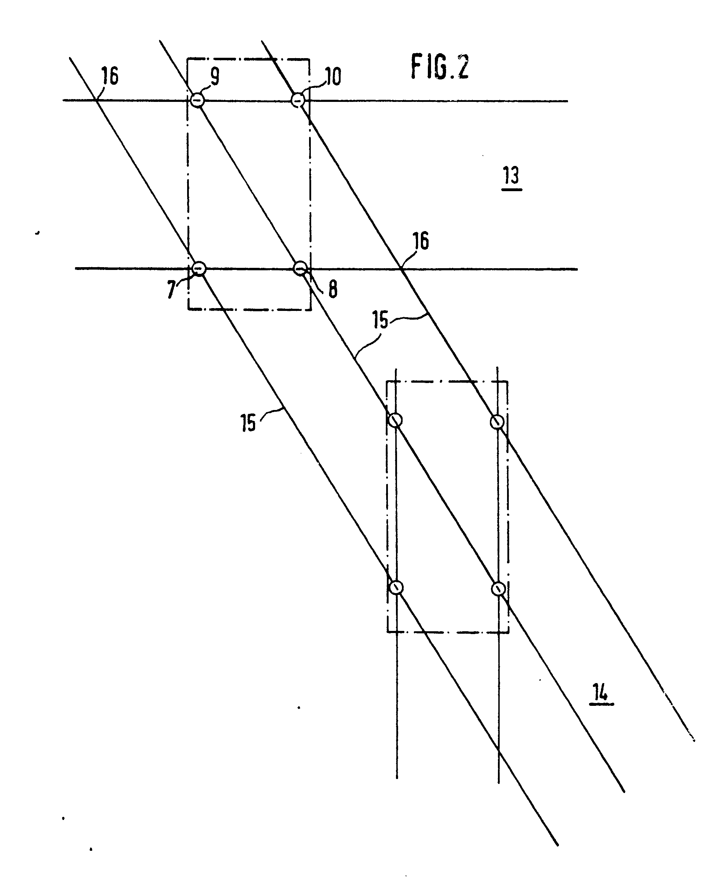

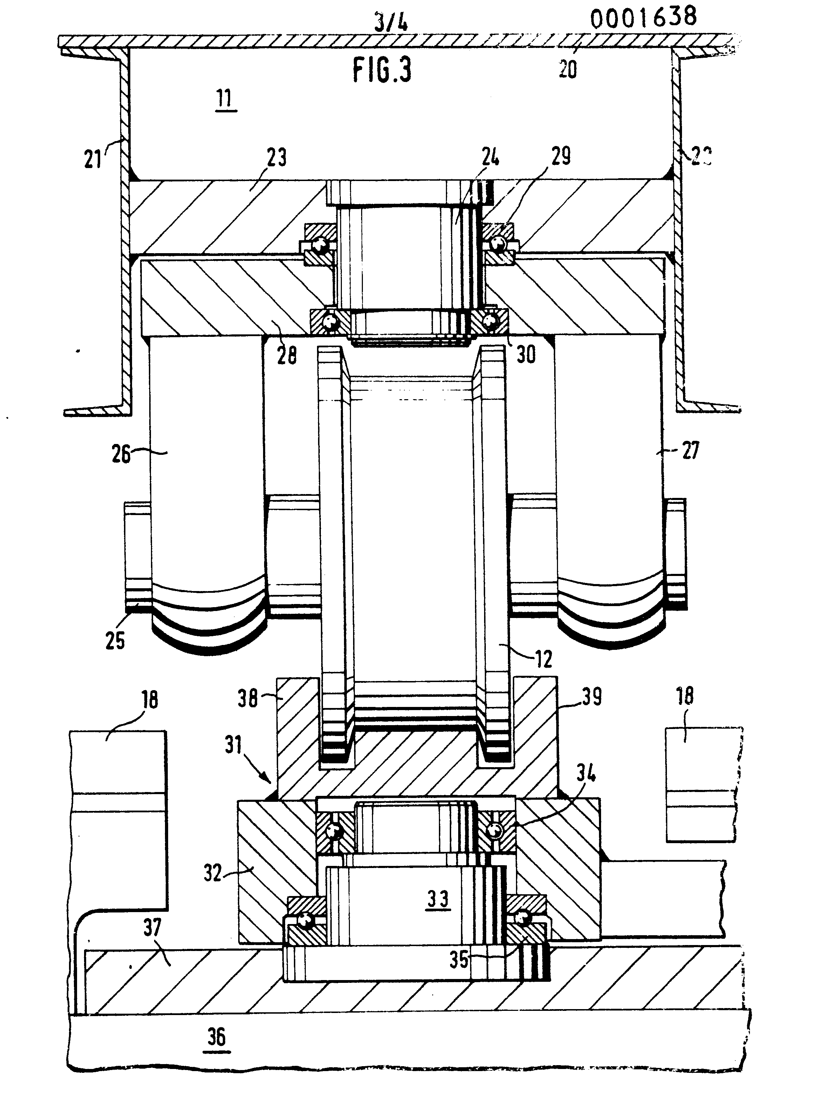

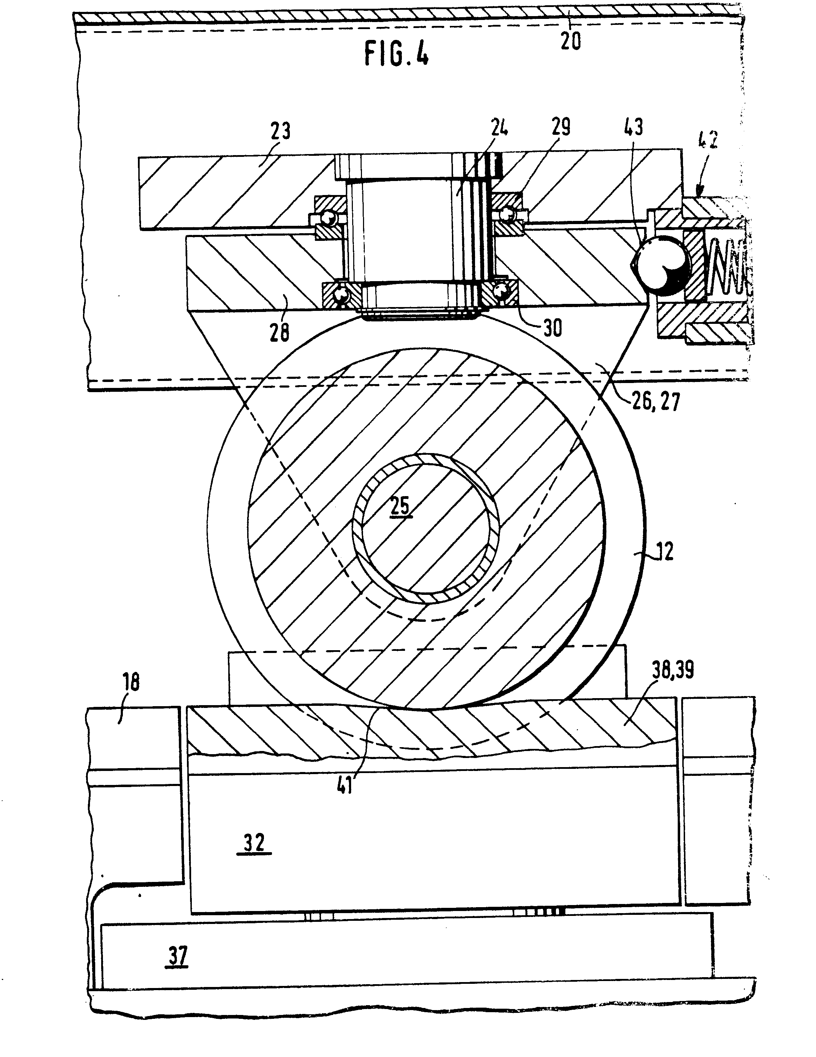

Figur 1 eine Draufsicht auf eine erfindungsgemäße Standbahnanlage mit vier Standbahnen, die sich in einem rechten Winkel schneiden, Figur 2 zwei sich in einem spitzen Winkel kreuzende Standbahnen, Figur 3 einen Schnitt nach Linie III-III in Figur 1 und Figur 4 einen Schnitt nach Linie IV-IV in Figur 1.
Die in Figur 1 dargestellte Standbahnanlage 1 besteht aus zwei Standbahnen 3, 4, die parallel zueinander verlaufen.

Senkrecht zu diesen beiden Standbahnen 3, 4 sind zwei weitere Standbahnen 5, 6 vorgesehen, die die Standbahnen 3, 4 in einem rechten Winkel schneiden. Die Kreuzungspunkte dieser Standbahnen sind mit 7 bis 10 bezeichnet. In der Kreuzungsstelle der Standbahn 4 mit der Standbahn 5 ist strichpunktiert eine Palette 11 eingezeichnet. Der Abstand der Räder 12 der Palette entspricht genau dem Abstand der Kreuzungspunkte 7 bis 10.

In Figur 2 sind zwei sich in einem spitzen Winkel schneidende Standbahnen 13 und 14 dargestellt. Die Standbahn 14 besteht in diesem Fall aus drei Schienen 15, auf deren mittlerer Schiene zwei Räder der Palette laufen, während auf den äußeren Schienen jeweils ein Rad läuft. In den Kreuzungspunkten 7 bis 10 der beiden Standbahnen 13 und 14 sind drehbare Schienenstücke angeordnet, während die Kreuzungspunkte 16 konventionell ausgebildet sind.

In Figur 3 und 4 ist ein Schnitt durch die Kreuzungsstelle 8 der Schienen 18 und 19 der beiden Standbahnen 4, 5 dargestellt. Unter der Bodenplatte 20 der Palette 11 sind zwei U-Träger 21, 22 befestigt, die beide mit einer Platte 23 verschweißt sind. In die Platte 23 ist ein Zapfen 24 eingepreßt, der als lotrechte Achse für das Rad 12 der Palette 11 dient. Die Achse 25 des Rades 12 ist in zwei Armen 26, 27 in bekannter Weise drehbar gelagert, die ihrerseits fest mit einer Platte 28 verschweißt sind. Die Platte 28 ist um den Zapfen 24 mit Hilfe von zwei Lagern 29, 30 drehbar gelagert, von denen das Lager 29 die in lotrechter Richtung wirkenden Kräfte und das Lager 30 die horizontal gerichteten Kräfte aufnimmt.

In den Kreuzungspunkten 7 bis 10 der Standbahnen ist je ein drehbares Schienenstück 31 angeordnet, daß zwei Schienen 18, 19 gemeinsam ist. Das Schienenstück 31 ist auf einem Bock 32 aufgeschweißt, der um einen lotrecht angeordneten

0001638

Zapfen 33 verschwenkbar ist. Zwischen dem Bock 32 und dem Zapfen 33 sind Lager 34 und 35 für die Aufnahme der lotrechten und horizontalen Kräfte angeordnet. Der Zapfen 33 ist seinerseits in einer auf einem Fundament 36 ruhenden Platte 37 eingepreßt.

Das Schienenstück 31 weist zwei seitliche hochgezogene Borde 38, 39 auf, die gewährleisten sollen, daß beim Drehen des Schienenstückes das Rad 12 der Palette mit verdreht wird. Desweiteren hat das Schienenstück 31, wie aus Figur 4 ersichtlich, im Bereich oberhalb des Zapfens 33 eine Vertiefung 41, die die Positionierung der Palette 11 auf dem Schienenstück erleichtert. Zur Verbesserung der Fahreigenschaften der Palette sind aus einer Kugel und Feder bestehende Verriegelungseinrichtungen 42 an jedem Rad angeordnet. Die federbelastete Kugel greift in auf den Umfang der Palette 28 angeordnete Ausnehmungen 43 und verhindert so ein Flattern des Rades beim Verschieben der Palette. Beim Verschwenken des Rades springt die Kugel selbsttätig aus der Ausnehmung 43.

Soll z.B. die Palette 11 von der Standbahn 4 über die Standbahn 5 auf die Standbahn 3 verschoben werden, so sind zunächst die drehbaren Schienenstücke 31 parallel zu den Schienen 18 der Standbahn 4 ausgerichtet. Nachdem die Räder 12 der Palette 11 auf den drehbaren Schienenstücken positioniert sind, werden diese mit Hilfe eines oder mehrerer Hydraulikzylinder solange verdreht, bis die Schienenstücke mit den Schienen 19 der Standbahn 5 fluchten. Anschließend kann die Palette 11 auf die Standbahn 5 aufgeschoben werden. Diese Standbahn 5 kann weitere Arbeitsstationen aufweisen oder aber als Zwischenlager dienen. Das Verschieben der Palette 11 von der Standbahn 5 auf die Standbahn 3 erfolgt in gleicher Weise.

Die erfindungsgemäße Standbahnanlage ermöglicht nicht nur eine erhebliche Einsparung an Hallenfläche, da keine Schiebebühne oder eine Anlage zur hydraulischen Absenkung benötigt wird und der Quertransport direkt zur Fertigung oder zum Zwischenlagerplatz benutzt werden kann. Eine weitere Einsparung an Hallenfläche läßt sich weiter dadurch erreichen, daß die Schienen in einfacher Weise diagonal angeordnet werden können, ohne daß teuere Drehbühnen erforderlich sind, da sich die Paletten ohne weiteres diagonal verschieben lassen. Desweiteren ist es möglich, mit den erfindungsgemäßen Paletten enge Radien zu durchfahren, ohne daß eine Kippgefahr besteht.

Die Radsteuerung läßt sich nicht nur bei schienengebundenen Anlagen einsetzen, sondern überall dort, wo Paletten oder palettenähnliche Teile in zwei oder mehreren Richtungen transportiert werden müssen. So kann z.B. bei normaler Bereifung der Palette die Räder mittels eines U-Eisens, welches dann die gleiche Bedeutung erhält wie das Schienenstück, oder aber durch Spurstangen an der Palette verdreht werden.

Patentansprüche:

1. Standbahnanlage für schienengebundene Transport-Paletten mit Rädern, welche um eine in der Palette gelagerte senkrechte Achse drehbar sind, und deren Standbahnen sich in beliebigen Winkeln kreuzen, dadurch gekennzeichnet,
daß in den vier Kreuzungspunkten (7 bis 10) der beiden, einander schneidenden Schienen (15, 16 und 18, 19) jeder Standbahn (3 bis 6, 13, 14) ein beiden gemeinsames, um eine senkrechte Achse (33) drehbares Schienenstück (31) für die Aufnahme je eines Rades (12) der Palette (11) vorgesehen ist.

2. Standbahn nach Anspruch 1, dadurch gekennzeichnet,
daß das drehbare Schienenstück (31) oberhalb seiner lotrechten Achse (33) eine Vertiefung (41) in seiner Lauffläche (40) aufweist.

3. Standbahnanlage nach Anspruch 1 oder 2, dadurch gekennzeichnet,
daß zumindest zwei der Schienenstücke (31) untereinander über Spurstangen verbunden und mit Hilfe eines Hydraulikzylinders verschoben werden.

4. Standbahnanlage nach einem der Ansprüche 1 bis 3, dadurch gekennzeichnet,
daß das Schienenstück (31) seitlich Borde (38, 39) für die seitliche Führung des Rades (12) aufweist.

5. Standbahnanlage nach einem der Ansprüche 1 bis 4, dadurch gekennzeichnet,
daß die lotrechte Achse (24) des Rades (12) in den Fahrstellungen verrastet ist.

FIG.1

FIG.2

2/4

0001638

0001638

FIG.3

0001638

FIG.4

Europäisches
Patentamt

# EUROPÄISCHER RECHERCHENBERICHT

EP 78 101 187.9

| Kategorie | EINSCHLÄGIGE DOKUMENTE Kennzeichnung des Dokuments mit Angabe, soweit erforderlich, der maßgeblichen Teile | betrifft Anspruch | KLASSIFIKATION DER ANMELDUNG (Int.Cl.²) |
|---|---|---|---|
| X | DE - B - 1 755 208 (D.J. TOWNSEND et al) <br> * Spalte 4, Zeilen 24 bis 59 * | 1,2,4 | B 65 G 7/00 <br> B 61 B 13/00 <br> E 01 B 25/00 |
| - | DE - C - 334 289 (NEUHAUSER) <br> * Seite 1, Zeilen 1 bis 14; Fig. 8, 9 * | 1 | |
| P | DE- U - 7 732 744 (HUNDHAUSEN) <br> * Ganzes Dokument * | 1-5 | **RECHERCHIERTE SACHGEBIETE (Int. Cl.²)** <br> B 61 B 13/00 <br> B 65 G 7/00 <br> B 65 G 35/00 |
| D | GB - A - 1 272 263 (FOUNDRY MANAGE-MENT) <br> * Seite 4, Zeilen 16 bis 27 * | 1 | E 01 B 25/00 <br> E 01 B 26/00 |
| A | AT - B - 258 796 (BORGS) | | |
| A | DE - A - 1 808 337 (KRUPP) | | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 15-01-1979 | SIMON |

EPA form 1503.1  06.78